(19) Europäisches Patentamt
European Patent Office
Office européen des brevets

(11) **EP 4 078 040 B1**

(12) **EUROPEAN PATENT SPECIFICATION**

(45) Date of publication and mention
of the grant of the patent:
**01.05.2024 Bulletin 2024/18**

(21) Application number: **20838167.3**

(22) Date of filing: **16.12.2020**

(51) International Patent Classification (IPC):
*F24F 11/81* (2018.01)       *F24F 11/85* (2018.01)
*F24F 3/14* (2006.01)        *F24F 11/00* (2018.01)
*F24F 1/0007* (2019.01)       *F24F 1/0038* (2019.01)

(52) Cooperative Patent Classification (CPC):
**F24F 11/81; F24F 1/0007; F24F 3/1405;
F24F 11/0008; F24F 11/85;** F24F 1/0038;
F24F 2110/10; F24F 2110/20; F24F 2110/40;
F24F 2140/20; Y02B 30/70

(86) International application number:
**PCT/GB2020/053232**

(87) International publication number:
**WO 2021/123763 (24.06.2021 Gazette 2021/25)**

(54) **IMPROVED AIR CONDITIONING SYSTEM**

VERBESSERTES KLIMAANLAGENSYSTEM

SYSTÈME DE CONDITIONNEMENT D'AIR AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2019 GB 201918655**

(43) Date of publication of application:
**26.10.2022 Bulletin 2022/43**

(73) Proprietor: **Intelligent Growth Solutions Limited
St Andrews Fife KY16 9DR (GB)**

(72) Inventor: **SKINNER, Niall Alexander
St Andrews Fife KY16 9DR (GB)**

(74) Representative: **HGF
HGF Limited
1 City Walk
Leeds LS11 9DX (GB)**

(56) References cited:
**EP-A1- 1 443 279        EP-A1- 2 607 805
EP-A1- 3 208 561        EP-A1- 3 460 349
EP-B1- 1 443 279        WO-A1-97/32167
AU-A4- 2011 100 169       CN-A- 108 375 177
FR-A1- 2 502 895        GB-A- 2 516 515
US-A1- 2014 131 009       US-A1- 2018 220 595
US-A1- 2019 368 766       US-B1- 10 165 734**

## Description

## Field of the Invention

The present invention is directed to the field of air conditioning units and systems, more specifically to the field of commercial air conditioning units and systems.

## Background of the Invention

Heating, Ventilation and Air Conditioning (HVAC) systems are used primarily to control air temperature within heavily occupied or heat loaded enclosed spaces. Typically the primary function of HVAC systems is space cooling.

Although they can also be used for space heating, the heating functionality of HVAC systems is typically used to rewarm air which has been chilled below comfortable levels before it is reintroduced into an occupied / process space.

HVAC systems work by extraction of air from a space and passing it across a cooling coil which reduces both the air temperature and humidity (humidity through the formation of condensation on contact of the warm air with the cold surface of the cooling coil). This cooled air is then filtered and reintroduced through an air handling unit which comprises a fan and a heating element, which is used to rewarm the air to a comfortable level for the space being conditioned. The recycled air can also be blended with 'fresh' outside air as it passes through the system to reduce energy consumption and ensure adequate oxygen content in the air for occupied spaces.

The most common problem associated with air conditioned spaces for human occupation is lack of humidity in the conditioned air leading to health issues, the problem with conventional HVAC in horticultural applications is the lack of ability to manipulate the humidity of the environment, while maintaining a suitable temperature for growth.

Conventional HVAC systems operate chillers in a binary mode, where the goal is to maintain a set surface temperature of the cooling coil. If any cooling is required, this surface temperature is maintained, if it is not then the cooling coil is left uncontrolled. Actual temperature in the space is maintained primarily by varying the airflow through the system (more flowing air produces a cooler environment), with fine control being achieved by blending of outside air and limited use of the heating coil.

However, due to the inherent loss of humidity in conventional systems, there remains a need for improved HVAC systems that can provide efficient air cooling whilst controlling the humidity of the air.

EP3208561 describes a heating, ventilation, and air conditioning (HVAC) system for regulating humidity of an enclosed space. The HVAC system includes an evaporator coil. A metering device is fluidly coupled to the evaporator coil. A variable-speed compressor is fluidly coupled to the condenser coil and the evaporator coil and a controller is operatively coupled to the variable-speed compressor. A humidity sensor is operatively coupled to the controller and exposed to the enclosed space.

US2018/220595 describes a vertical plant growing system may include a vertical plant stand having a central lighting array and defining a plurality of guided airflows, the plant stand being coupled to a heating, ventilation, and air conditioning (HVAC) system. The HVAC system and plant stand may be operable in a plurality of airflow modes, ranging from about 35 degrees Fahrenheit (to inhibit insect growth) to about 98 degrees Fahrenheit (to kill mold).

Accordingly, at least some aspects of the present invention are aimed at providing an improved HVAC system.

## Summary of the Invention

The invention is set out the in the claims.

The heat exchanger is configured such that the temperature of the heat exchanger is adjustable. Accordingly, the temperature of the heat exchanger can be controlled and adjusted such that the heat exchanged between the air and the heat exchanger is controlled and the degree of dehumidification of the air is controlled. Therefore, the HVAC system may be configured to reduce the humidity of the air passing through the conditioning unit by adjusting the temperature of the heat exchanger below the dew point of the air. For example, if dehumidification is required, the temperature of the heat exchanger may be reduced to below the dew point of the air to induce condensation when the air contacts the heat exchanger. If dehumidification of the air is not required, the temperature of the heat exchanger may be increased above the dew point of the air to ensure that condensation does not occur on the heat exchanger.

The heat exchanger may be configured such that the temperature of the surface of the heat exchanger is adjustable. Accordingly, the temperature of the surface that contacts the air within the conditioning unit can be controlled and adjusted such that the heat exchanged between the air and the heat exchanger is controlled and the degree of dehumidification of the air is controlled. For example, if dehumidification is required, the temperature of the surface of the heat exchanger may be reduced to below the dew point of the air to induce condensation when the air contacts the surface of the heat exchanger. If dehumidification of the air is not required, the temperature of the surface of the heat exchanger may be increased above the dew point of the air to ensure that condensation does not occur on the surface of the heat exchanger.

The heat exchanger may be a cooling coil. The cooling coil may be a hollow element comprising a material that is a good conductor of heat. The cooling coil may be metallic. The cooling coil may comprise copper, iron, steel, or another metallic heat conducting material.

The heat exchanger may comprise a plurality of cooling fins. The cooling fins may provide a greater surface area to the heat exchanger to thereby improve the efficiency of heat exchange between air passing through the conditioning unit and the heat exchanger.

The heat exchanger contains a coolant. The coolant may flow through the heat exchanger.

The coolant may absorb heat from the heat exchanger and transport that heat away from the heat exchanger. Accordingly, the heat exchanger may be configured to absorb heat from air in the conditioning unit to thereby cool the air in the conditioning unit.

The coolant is water.

The temperature of the heat exchanger may be controlled by varying the coolant temperature. The conditioning unit may comprise a coolant reservoir and during use coolant may flow between the coolant reservoir and the heat exchanger. The conditioning unit may comprise a coolant pump. The coolant pump may pump coolant between the coolant reservoir and the heat exchanger. The coolant reservoir may contain a reservoir heat exchanger. Accordingly, the reservoir heat exchanger may be configured to receive heat from or transfer heat to the coolant retained within the coolant reservoir. The reservoir heat exchanger may be a thermoelectric device or a Peltier device, for example. Alternatively, the reservoir heat exchanger may be an air-cooled heat exchanger.

The conditioning unit may comprise a secondary heat exchanger. The secondary heat exchanger may receive coolant from the coolant reservoir and return coolant to the coolant reservoir. The conditioning unit may comprise a secondary coolant pump configured to pump coolant between the coolant reservoir and the secondary heat exchanger. The secondary heat exchanger may be configured to transfer heat to or receive heat from coolant from the coolant reservoir to thereby adjust the temperature of the coolant within the coolant reservoir. The secondary heat exchanger may comprise a compressor circuit and the secondary heat exchanger may comprise a refrigerant. The secondary heat exchanger may comprise a thermoelectric device or a Peltier device. Alternatively, the secondary heat exchanger may be an air-cooled heat exchanger, or a refrigerant gas heat exchanger.

The temperature of the heat exchanger may controlled by varying the flow rate of coolant through the heat exchanger. Accordingly, if the temperature of the heat exchanger is to be reduced, the flow rate of coolant through the heat exchanger may be increased.

The temperature of the heat exchanger may be controlled by varying the coolant temperature and by varying the flow rate of coolant through the heat exchanger.

The HVAC system may further comprise a controller, one or more sensors adjacent to the inlet, and one or more sensors adjacent to the outlet, and during use the controller may be configured to (i) receive signals from the one or more sensors adjacent to the inlet and the one or more sensors adjacent to the outlet, (ii) determine whether the air entering the inlet is at a target temperature, and/or a target humidity and (iii) adjust the fan speed such that the air contacts the heat exchanger to transfer heat between the heat exchanger and the air to thereby reach the target temperature and/or humidity.

In embodiments where the temperature of the heat exchanger or the surface of the heat exchanger is adjustable, wherein the conditioning unit further comprises a controller, one or more sensors adjacent to the inlet, and one or more sensors adjacent to the outlet, and during use the controller is configured to (i) receive signals from the one or more sensors adjacent to the inlet and the one or more sensors adjacent to the outlet, (ii) determine whether the air entering the inlet is at the target temperature, and/or the target humidity, (iii) adjust the fan speed such that the air contacts the heat exchanger to transfer heat between the heat exchanger and the air to thereby reach the target temperature, and (iv) adjusts the temperature of the heat exchanger to thereby reach the target humidity.

The one or more sensors may be configured to record the temperature of air contacting the sensor. The one or more sensors may be configured to record the humidity of air contacting the or each sensor. The one or more sensors may be configured to record the pressure of the air contacting the or each sensor. The one or more sensors may comprise a temperature sensor. The one or more sensors may comprise a humidity sensor. The one or more sensors may comprise a pressure sensor. Alternatively, the one or more sensors may comprise a sensor configured to record or determine temperature, and/or humidity and/or pressure of air contacting the sensor.

Typically, the one or more sensors comprise a temperature sensor and a humidity sensor.

As used herein, the term "humidity" is intended to refer to relative humidity. Relative humidity is typically expressed as a percentage and indicates a humidity relative to a maximum humidity for air at a given temperature.

The controller may calculate the dew point of the air entering the inlet of the HVAC system. The controller may use the temperature and relative humidity of the air as determined by the one or more sensors to calculate the dew point of the air entering the inlet of the HVAC system. For example, the controller may use the formula:

$$T_{dp} \approx T - \frac{100 - RH}{5}$$

where $T_{dp}$ is the dew point temperature of the air in degrees C, T is the determined temperature of the air in degrees C, and RH is the determined relative humidity of the air as a percentage.

Alternatively, the controller may store a lookup table of values of dew point for air for given temperatures and/or humidities, and the controller may use the values within the lookup table to determine the dew point of the air.

The HVAC system may comprise a steriliser. The steriliser may be an ultraviolet (UV) steriliser. The UV steriliser may irradiate air entering the inlet of the HVAC system with UV radiation. The UV steriliser may irradiate air exiting the outlet of the HVAC system with UV radiation. The UV steriliser may irradiate air entering the inlet and exiting the outlet of the HVAC system with UV radiation.

The HVAC system may comprise a vent. Accordingly, in embodiments comprising one or more pressure sensors, if during use it is determined that the pressure within the HVAC system has exceeded a target pressure or an upper threshold pressure, the vent may be opened to release air out of the HVAC system to thereby reduce the pressure within the HVAC system. Once the pressure has been determined to be at the target pressure, or to be otherwise acceptable the vent may be closed.

The HVAC system may comprise an external inlet. Accordingly, in embodiments comprising one or more pressure sensors, if during use it is determined that the pressure within HVAC system has dropped below a target pressure or a lower threshold pressure, the external air inlet may be opened and air from outside of the HVAC system may be drawn into the HVAC system to thereby raise the pressure. Once the pressure has been determined to be at the target pressure or has exceeded the lower threshold pressure, the external inlet may be closed. The HVAC system may comprise a positive pressure unit. The positive pressure unit may comprise a charging fan, an external inlet and an outlet. The outlet may be in fluid communication with the conditioning unit such that air urged by the charging fan from the external inlet passes into the conditioning unit. The charging fan may be configured to increase the pressure within the chamber. The charging fan may be configured to maintain the pressure within the chamber to compensate for any leaks within the chamber that allows the pressure within the chamber to decrease. In embodiments comprising a charging fan, the HVAC system may not comprise a vent and any excess pressure may be relieved by reducing the speed of the charging fan to thereby allow the pressure within the chamber to reduce.

The external inlet may comprise a filter. The filter may be configured to remove particulates that may be present in air that is brought through the external inlet. Accordingly, air entering the HVAC system may be substantially free of particulates, thereby minimising particulate contamination within the system.

The HVAC system is typically incorporated within an internal space. For example, the HVAC system may be installed within an office building or retail building. In a preferred embodiment, the HVAC system is incorporated within an internal farm, such as a greenhouse, or vertical growth tower.

Typically, in embodiments where the HVAC system is installed within an internal farm, a positive pressure is maintained within the chamber by the HVAC system. Accordingly, the pressure within the chamber is maintained at a value that is greater than the pressure outside the chamber. As a result, the infiltration of the chamber by pests or contaminants may be reduced.

In embodiments where the HVAC system is incorporated within a greenhouse or vertical growth tower the plants grown within the greenhouse or vertical growth tower produce heat and transpire, thereby raising the humidity of the air within the greenhouse or vertical growth tower. Accordingly, the HVAC system of the present aspect is typically used to reduce the humidity of the air within the greenhouse or growth tower, and to cool the air within the greenhouse or vertical growth tower.

The enclosed space is a vertical growth tower.

The vertical growth tower may comprise a stack comprising a plurality of growth trays upon which plants may grow in the stack. The HVAC system may comprise an outlet conduit extending from the conditioning unit and the outlet conduit may comprise a plurality of outlets. One outlet within the plurality of outlets may be associated with one growth tray within plurality of growth trays in the stack such that each growth tray within the plurality of growth trays is associated with a separate outlet. The HVAC system may comprise an inlet conduit extending from the conditioning unit to the stack. The inlet conduit may comprise a plurality of inlets. One inlet within the plurality of inlets may be associated with one growth tray within the plurality of growth trays in the stack such that each growth tray within the plurality of growth trays is associated with a separate inlet. Alternatively, one inlet within the plurality of inlets may be associated with a group of growth trays within the plurality of growth trays.

In some embodiments the HVAC system and enclosed space may form a closed loop such that a fixed or substantially fixed volume of air is conditioned continually within the enclosed space. As a result, the HVAC system may be required to only address changes in the temperature and/ humidity of the air that are produced within the enclosed space. Accordingly, the HVAC system may require less energy to condition the air within the enclosed space when compared to open spaces, for example.

If the controller determines the system humidity to be higher than the target value, the heat exchanger temperature may be reduced to reduce the humidity of the air passing through the conditioning unit.

If the controller determines the system humidity to be lower than the target value or is at the target value, the temperature of the heat exchanger may be increased to be above the dew point of the air such that dehumidification does not occur and therefore the humidity of the air remains substantially the same.

In some embodiments the temperature of the heat exchanger may remain constant and the speed of the fan may be varied to thereby control the speed at which the air is urged or driven through the conditioning unit of the HVAC system. Varying the speed at which the air is urged or driven through the conditioning unit may vary the heat transferred between the heat exchanger and the air to thereby control the amount of cooling or heating of the air.

**Brief Description of the Figures**

Embodiments of the present invention will now be described, by way of non-limiting example, with reference to the accompanying drawings.

> **Figure 1:** A plan view of a HVAC system according to an embodiment;
> **Figure 2:** A side plan view of a vertical growth tower including a HVAC system according to an embodiment;
> **Figure 3:** A plan view of a HVAC system according to an embodiment;
> **Figure 4:** A side plan view of a vertical growth tower including a HVAC system according to an embodiment;
> **Figure 5:** A plan view of a HVAC system according to an embodiment;
> **Figure 6:** An example algorithm for controlling the temperature in a vertical growth tower comprising a HVAC system according to an embodiment; the dashed line indicates waiting for a predetermined period before performing the action; subroutines that run at all times, (1) fan control - speed control on the fan to maintain sensor 3 (S3) - sensor 4 (S4) = delivery pressure setpoint (2) maintain valve opening offsets to each other (e.g. valve 2 always 10% more open than valve 1);
> **Figure 7:** A schematic view of a positive pressure unit;
> **Figure 8:** A side plan view of a commercial space including a HVAC system according to an embodiment; and
> **Figure 9:** An example algorithm for controlling the temperature in a commercial space comprising a HVAC system according to an embodiment.

**Detailed Description**

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

Example 1

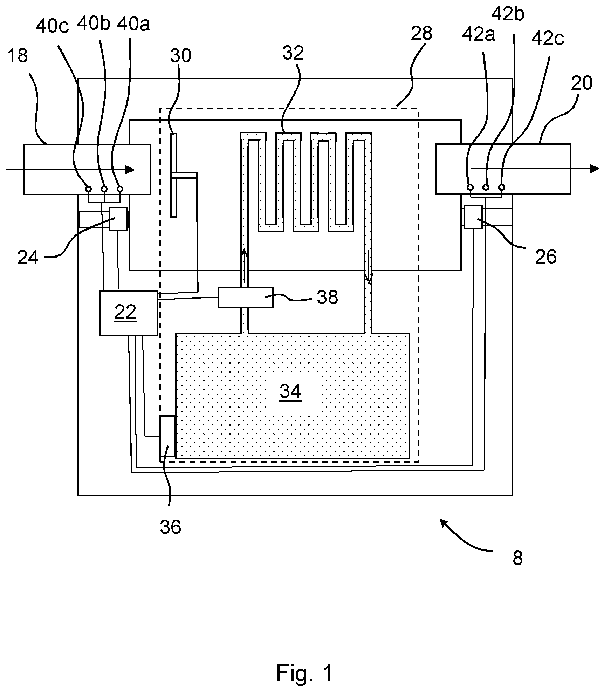

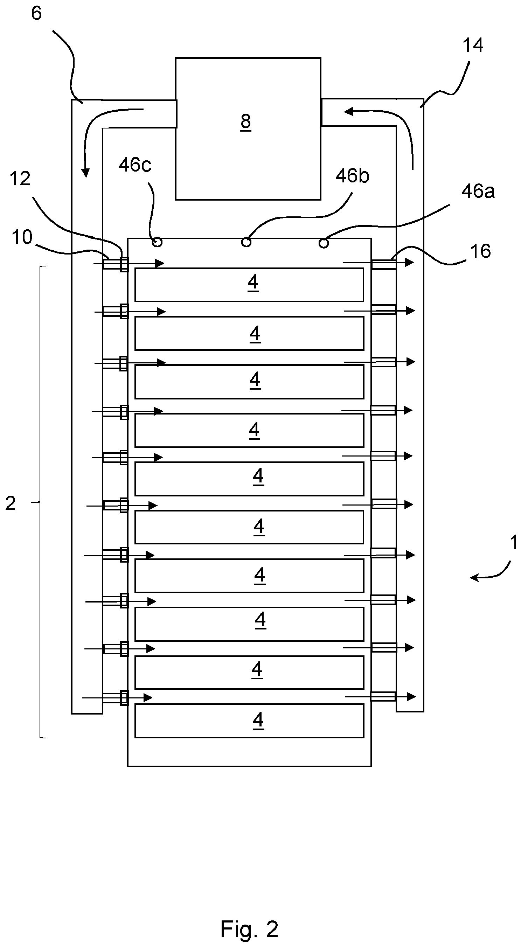

With reference to Figures 1 and 2 there is provided a vertical growth tower 1 comprising an array 2 of growth trays 4 arranged in a stack. Each growth tray 4 in the array 2 of growth trays has an array of LEDs (not shown) positioned on the underside of the growth tray 4 to provide light to the growth tray below it in the array. Adjacent to the array 2 of growth trays is a first conduit 6 from an HVAC system 8 having an outlet 10 associated with each growth tray 4 directing conditioned air to that growth tray. Each outlet 10 in the conduit comprises a valve 12 to control the flow of air out of the first conduit 6 to the associated growth tray. Adjacent to the array 2 of growth trays is a second conduit 14 to the HVAC system 8 having an inlet 16 associated with each growth tray 4 drawing air from that growth tray.

The HVAC system 8 comprises an inlet 18, an outlet 20, a controller 22, an external intake valve 24, an external vent 26 and a conditioning unit 28. The inlet 18 is connected to the second conduit 14 and the outlet 20 is connected to the first conduit 6. The conditioning unit 28 comprise a variable speed fan 30, a cooling coil 32 (acting as a heat exchanger), a coolant reservoir 34 containing water (acting as a coolant), a coolant heating/cooling unit 36 and a coolant pump 38. During use, air is drawn into the conditioning unit 28 via the inlet 18 by the variable speed fan 30, contacts the cooling coil 32 and passes out of the conditioning unit 28 via the outlet 20. Coolant is pumped through the cooling coil 32 by the coolant pump 38 in a circuit from the coolant reservoir 34 to the cooling coil 32 and back again.

The inlet 18 comprises a temperature sensor 40a, a humidity sensor 40b and a pressure sensor 40c, and the outlet 20 comprises a temperature sensor 42a, a humidity sensor 42b and a pressure sensor 42c. The controller 22 of the HVAC system 8 receives signals from the sensors of the inlet (40a, 40b, 40c) and the outlet (42a, 42b, 42c) of the HVAC system 8.

During use, the vertical growth tower 1 generates heat from the arrays of LEDs, and from the plants growing in the growth trays themselves. In addition, the plants growing in the trays transpire, thereby raising the humidity of the air in each tray.

Therefore, the HVAC system 8 is typically required to reduce the humidity of the air and to cool the air passing through the conditioning unit 28 of the HVAC system 8.

Accordingly, a target temperature, a target humidity and a target pressure are set for the vertical growth tower. The dew point for the air passing entering the inlet is determined by the controller 22 from the measured relative humidity and temperature recorded by the temperature sensor 40a and humidity sensor 40b at the inlet 18. During normal operation, the temperature of air entering the inlet 18 is higher than the target temperature for the tower 1, and therefore, the fan 30 urges the air through the conditioning unit 28 to contact the cooling coil 32 to thereby reduce the temperature of the air to the target temperature. The humidity of the air entering the inlet 18 is also often higher than the target humidity, and therefore the temperature of the cooling coil 32 is set to be below the determined dew point for the air entering the inlet 18 such that water condenses out of the air upon contact with the surface of the cooling coil 32 to thereby reduce the humidity of that air.

However, if the air entering the inlet 18 has a humidity that is approximately equal to the target humidity, the cooling coil temperature is maintained above the determined dew point for the air such that substantially no condensation occurs, and therefore the humidity level of the conditioned air is thereby maintained.

Accordingly, unlike conventional HVAC systems where the cooling coil has a fixed temperature, the air is not cooled, dehumidified, rehumidified and reheated to attain the target temperature and humidity, and therefore, the HVAC system of this example is more efficient than conventional HVAC systems.

Typically, the HVAC system maintains the temperature within the vertical growth tower within the range 23°C to 32°C. The HVAC system maintains the humidity within the vertical growth tower within the range 50% to 80% relative humidity. The HVAC system maintains the pressure within the vertical growth tower to be approximately 10Pa above ambient pressure.

If the pressure at the inlet 18 is determined to be less than the target pressure range, the external intake valve 24 is opened to draw additional air into the HVAC system to increase the pressure until the target pressure is reached.

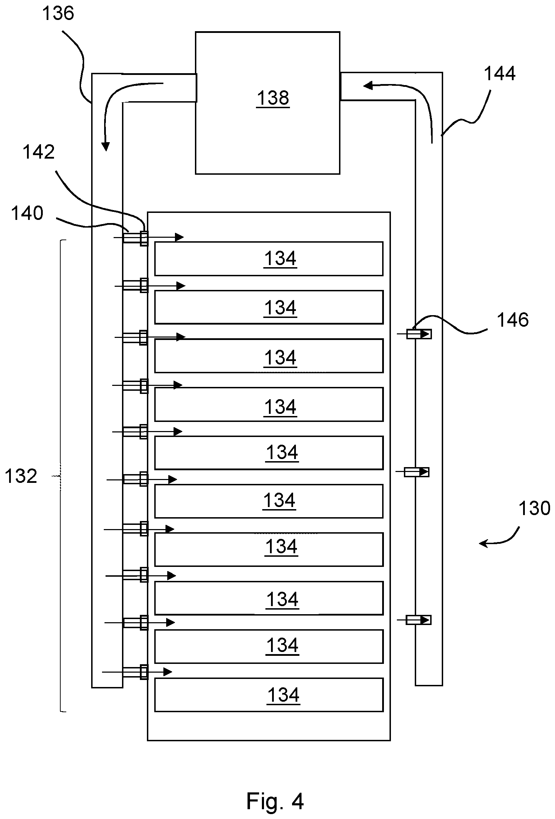

In an alternative embodiment with reference to Figure 4, the vertical growth tower 130 comprises an array of inlets 140 and an array of outlets 146 that comprise fewer outlets respectively than the number of growth trays 134 in the array of growth trays 132. Accordingly, a given inlet within the array of inlets 140 is associated with one growth tray 134, and a given outlet 146 within the array of outlets is not associated with any one growth tray 134.

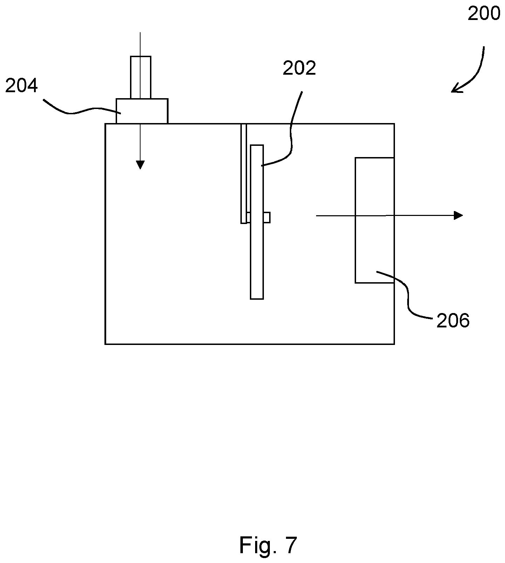

In a further alternative embodiment, with reference to Figure 7 the vertical growth tower 1 comprises a positive pressure unit 200 comprising a charging fan 202, an external intake valve 204, and an outlet 206 to the vertical growth tower 1, and the vertical growth tower 1 does not comprise an external vent, and the charging fan 202 is configured to maintain the pressure within the vertical growth tower 1. During use, if the pressure at the inlet 18 is determined to be greater than the target pressure range, the speed of the charging fan 202 is reduced to thereby allow the pressure within the vertical growth farm 1 to be reduced. If the pressure at the inlet 18 is determined to be less than the target pressure range, the speed of the charging fan 202 is increased to thereby increase the pressure within the vertical growth farm 1.

Example 2

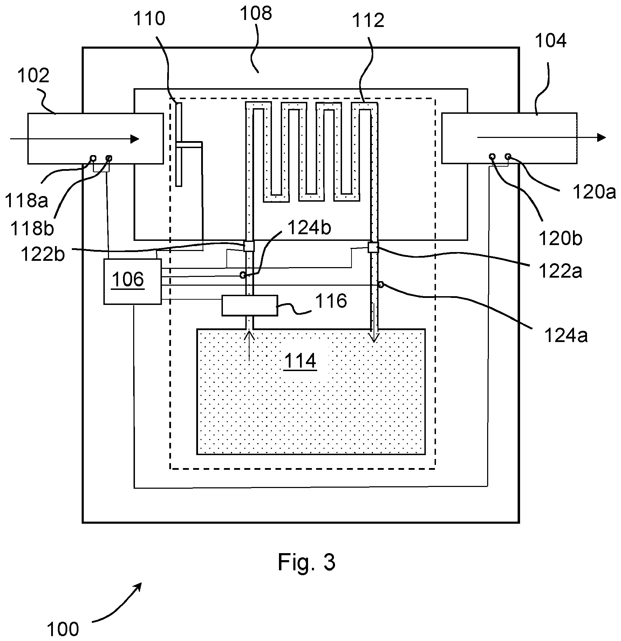

In an alternative embodiment with reference to Figure 3, an HVAC system 100 comprises an inlet 102, an outlet 104, a controller 106, and a conditioning unit 108. The conditioning unit 108 comprise a variable speed fan 110, a cooling coil 112 (acting as a heat exchanger), a coolant reservoir 114 containing water (acting as a coolant), and a coolant pump 116. During use, air is drawn into the conditioning unit 108 via the inlet 102 by the variable speed fan 110, contacts the cooling coil 112 and passes out of the conditioning unit 108 via the outlet 104. Coolant is pumped through the cooling coil 112 by the coolant pump 116 in a circuit from the coolant reservoir 114 to the cooling coil 112 and back again. An inlet valve 122a and outlet valve 122b control the flow rate of water between the cooling coil 112 and reservoir 114. Temperature sensors 124a and 124b measure the temperature of the water flowing from the cooling coil and to the cooling coil respectively. The temperature of the cooling coil is controlled by opening or closing the inlet valve 122a and/or the outlet valve 122b in response to the temperature of the cooling water as measured by the temperature sensors 124a and 124b.

The inlet 102 comprises a temperature sensor 118a, and a humidity sensor 118b, and the outlet 104 comprises a temperature sensor 120a, a humidity sensor 120b. The controller 106 of the HVAC system 100 receives signals from the sensors of the inlet (118a, 118b) and the outlet (120a, 120b) of the HVAC system 100.

Prior to use, a target temperature, and a target humidity are set for the HVAC system 100. The dew point for the air passing entering the inlet 102 is determined by the controller 106 from the measured relative humidity and temperature recorded by the temperature sensor 118a and humidity sensor 118b at the inlet 102. During normal operation, the temperature of air entering the inlet 102 is higher than the target temperature, and therefore, the fan 110 urges the air through the conditioning unit 108 to contact the cooling coil 112 to thereby reduce the temperature of the air to the target temperature. In some instances, the flow rate of the coolant flowing through the cooling coil 112 may be changed to increase or reduce the rate at which heat is transferred between the air and cooling coil 112. If the humidity of the air entering the inlet 102 is determined to be higher than the target humidity the temperature of the cooling coil 112 is set to be below the determined dew point for the air entering the inlet 102 by increasing the flow rate of coolant flowing through the cooling coil 112 such that water condenses out of the air upon contact with the surface of the cooling coil 112 to thereby reduce the humidity of that air. If the humidity of the air entering the inlet 102 is determined to be at or lower than the target humidity the temperature of the cooling coil 112 is set to be above the determined dew point for the air entering the inlet 102.

The HVAC system may be used to condition the air of any enclosed space, such as that within an office building, an office space, an industrial building, a commercial building such as a hotel or similar, or within domestic buildings. The HVAC system may also be used to condition the air in an indoor growing environment, such as a greenhouse or a vertical farm.

Example 3

The HVAC systems described herein may be operated manually, where the temperature of the cooling coil and the speed of the variable fan are set and adjusted until the desired temperature and humidity are reached and maintained.

The HVAC systems described herein may also be operated automatically, where the controller makes any necessary adjustments of the fan speed and cooling coil temperature in accordance with a program or algorithm stored in the memory of the controller.

A vertical growth tower 1 according to Example 1 further comprises a valve 44 associated with the outlet 10 associated with each growth tray 4 and the valve 44 can be variably opened or closed during use to control the flow of air into the associated growth tray 4. In addition, the vertical growth tower comprises a temperature sensor 46a, a humidity sensor 46b and pressure sensor 46c.

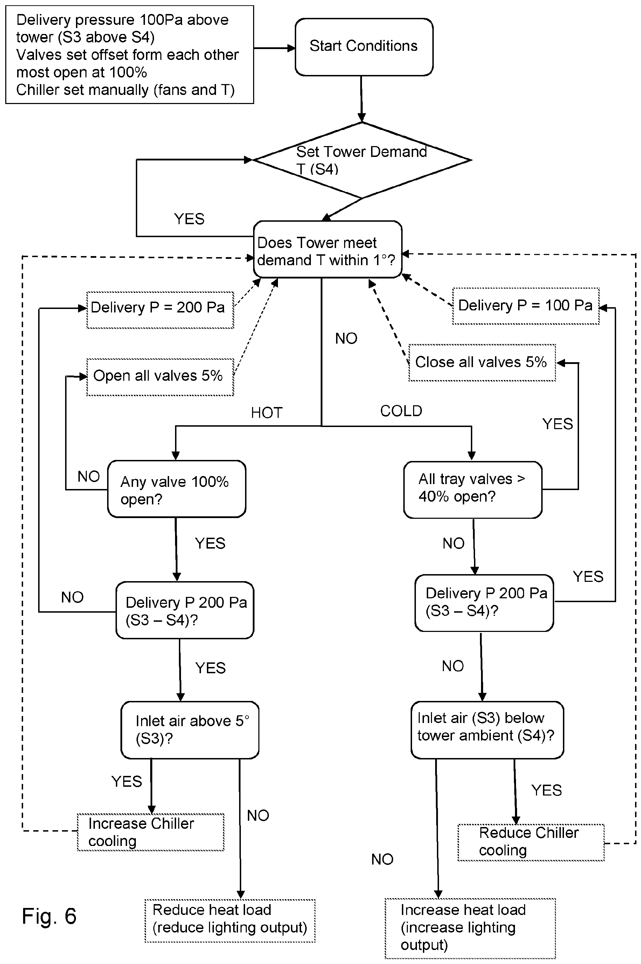

An example algorithm for controlling the temperature in the vertical growth tower is shown in Figure 6.

Prior to operation the target conditions for the vertical growth tower 1 are set, including the target temperature (tower demand temp), the target humidity and target pressure. The controller then checks whether the temperature as recorded by the temperature sensor 46a meets the target temperature within 1°C.

If the tower temperature does meet the target temperature the algorithm returns to the checking state. If the tower temperature does not meet the target temperature, the controller determines whether the tower temperature is above the target temperature or below the tower target temperature.

If the tower temperature is above the target temperature, the controller checks to determine whether any of the outlet valves 44 are 100% open. If no outlet valves are 100% open, all outlet valves are opened a further 5% and the algorithm checks whether the tower temperature meets the target temperature within 1 degree after pausing for 15 minutes. If any of the outlet valves 44 are 100% open, the controller determines whether the delivery pressure (as determined by the pressure sensor 42c at the outlet 20) is 200Pa above the tower pressure (as determined by the tower pressure sensor 46c). If the delivery pressure is determined to not be 200Pa above the tower pressure, the fan speed is adjusted to adjust the delivery pressure to 200 Pa above the tower pressure. If the delivery pressure is determined to be 200Pa above the tower pressure, the temperature of the air at the outlet 20 of the HVAC system 8 of the vertical growth tower 1 is checked. If the temperature of the air at the outlet 20 is determined to be above 5°C, the cooling coil temperature is reduced. After a pause of 15 minutes the controller reverts to the step of checking the tower temperature. If the temperature of the air at the inlet 18 is determined to not be above 5°C the heat load created by the vertical growth tower is reduced by reducing the lighting output.

If the tower temperature is below the target temperature, the controller checks to determine whether all of the outlet valves 44 are greater than 40% open. If all outlet valves are greater than 40% open, the controller closes all outlet valves by 5% and the algorithm reverts to the tower temperature checking step after pausing for 15 minutes. If all of the outlet valves 44 are not greater than 40% open, the controller determines whether the delivery pressure (as determined by the pressure sensor 42c at the outlet 20) is 200Pa above the tower pressure (as determined by the tower pressure sensor 46c). If the delivery pressure is determined to be 200Pa above the tower pressure, the fan speed is adjusted to adjust the delivery pressure to 100 Pa above the tower pressure. If the delivery pressure is determined to not be 200Pa above the tower pressure, the temperature of the air at the inlet 18 of the HVAC system 8 of the vertical growth tower 1 is checked. If the temperature of the air at the inlet 18 is determined to be below tower ambient temperature (typically between 23°C to 32°C), the cooling coil temperature is increased by reducing cooling by the chiller (cooling coil). After a pause of 15 minutes the controller reverts to the step of checking the tower temperature. If the temperature of the air at the inlet 18 is determined to not be below tower ambient temperature the heat load created by the vertical growth tower is increased by increasing the lighting output.

Example 4

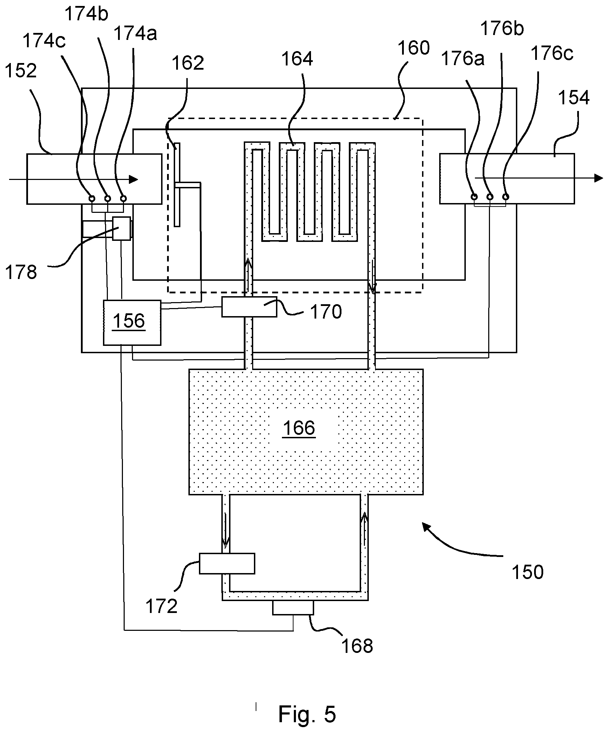

An alternative example, with reference to Figure 5, a HVAC system 150 comprises an inlet 152, an outlet 154, a controller 156, an external intake valve 178, and a conditioning unit 160. The conditioning unit 160 comprise a variable speed fan 162, a cooling coil 164 (acting as a heat exchanger), a coolant reservoir 166 containing water (acting as a coolant), a coolant heating/cooling unit 168, a coolant pump 170, and a secondary coolant pump 172. During use, air is drawn into the conditioning unit 160 via the inlet 152 by the variable speed fan 162, contacts the cooling coil 164 and passes out of the conditioning unit 160 via the outlet 154. Coolant is pumped through the cooling coil 164 by the coolant pump 170 in a circuit from the coolant reservoir 166 to the cooling coil 164 and back again. Coolant is pumped pass the heating/cooling unit 168, by the secondary coolant pump 172

The inlet 152 comprises a temperature sensor 174a, a humidity sensor 174b and a pressure sensor 174c, and the outlet 154 comprises a temperature sensor 176a, a humidity sensor 176b and a pressure sensor 176c. The controller 156 of the HVAC system 158 receives signals from the sensors of the inlet (174a, 174b, 174c) and the outlet (176a, 176b, 176c) of the HVAC system 158.

Example 5

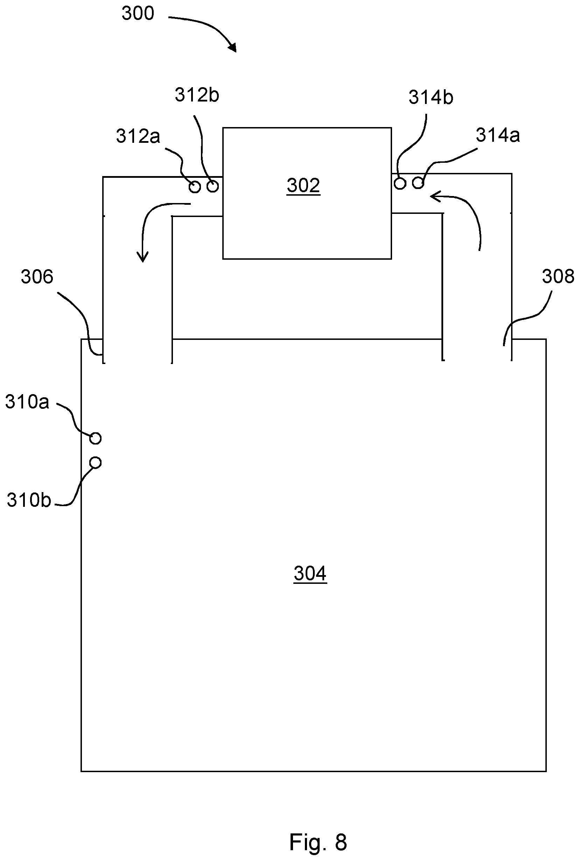

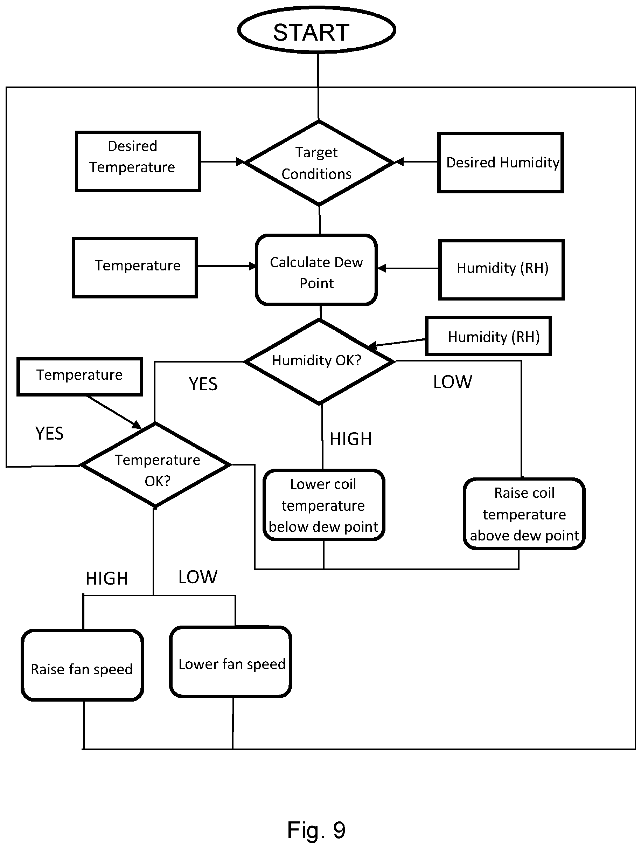

A HVAC system used to condition a commercial space such as that shown in Figure 8 may be operated automatically following an algorithm such as that shown in Figure 9. The HVAC system may control the temperature and humidity of the commercial space.

The enclosed space 304 comprises a temperature sensor 310a and a humidity sensor 310b. The inlet 308 of the HVAC system 302 comprises a temperature sensor 314a and a humidity sensor 314b. The outlet 306 of the HVAC system 302 comprises a temperature 312a and a humidity sensor 312b.

Initially, the target humidity and temperature are set. The dew point of the air entering the inlet 308 of the HVAC system 302 from the enclosed space 304 is calculated from the temperature and the relative humidity recorded from the temperature sensor 314a and humidity sensor 314b in the inlet 308 of the HVAC system 302.

If the humidity is determined to be higher than the target humidity, the temperature of the cooling coil of the HVAC system is lowered to below the dew point of the air. If the humidity is determined to be lower than the target humidity, the temperature of the cooling coil is raised to be above the dew point of the air entering the inlet.

If the humidity is determined to be at the target humidity, the measured temperature is compared against the target temperature.

If the measured temperature is at the target temperature, the algorithm reverts to the beginning.

If the measured temperature is determined to be above the target temperature the speed of the fan is increased and the algorithm reverts to the beginning.

If the measured temperature is determined to be below the target temperature the speed of the fan is decreased and the algorithm reverts to the beginning.

**Claims**

1. A vertical growth tower comprising a heating, ventilation and air conditioning (HVAC) system for conditioning air within the vertical growth tower, the system comprising:

   an inlet,
   an outlet, and
   a conditioning unit,

   the conditioning unit comprising a fan configured to urge air into the system from the vertical growth tower via the inlet and out of the system into the vertical growth tower via the outlet, and a heat exchanger contains coolant that flows through the heat exchanger, the heat exchanger is configured to exchange heat with the air within the conditioning unit, wherein the coolant is water;

   wherein during operation, air is urged through conditioning unit by the fan such that heat is exchanged between the air and the heat exchanger, wherein the fan is configured to vary the flow rate of air urged through the conditioning unit to thereby control the amount of heat transferred between the air and the heat exchanger,
   wherein the HVAC system is configured to reduce the humidity of the air passing through the conditioning unit by adjusting the temperature of the heat exchanger below the dew point of the air,
   wherein the temperature of the heat exchanger is controlled by varying the coolant temperature and by varying the flow rate of coolant through the heat exchanger.

2. The vertical growth tower according to claim 1, wherein the heat exchanger is a cooling coil.

3. The vertical growth tower according to any preceding claim, wherein the conditioning unit further comprises a controller, one or more sensors adjacent to the inlet, and one or more sensors adjacent to the outlet, and during use the controller is configured to (i) receive signals from the one or more sensors adjacent to the inlet and the one or more sensors adjacent to the outlet, (ii) determine whether the air entering the inlet is at a target temperature, and/or a target humidity and (iii) adjust the fan speed such that the air contacts the heat exchanger to transfer heat between the heat exchanger and the air to thereby reach the target temperature and/or humidity.

4. The vertical growth tower according to any of claims 1 or 2, wherein the conditioning unit further comprises a controller, one or more sensors adjacent to the inlet, and one or more sensors adjacent to the outlet, and during use the controller is configured to (i) receive signals from the one or more sensors adjacent to the inlet and the one or more sensors adjacent to the outlet, (ii) determine whether the air entering the inlet is at the target temperature, and/or the target humidity, (iii) adjust the fan speed such that the air contacts the heat exchanger to transfer heat between the heat exchanger and the air to thereby reach the target temperature, and (iv) adjusts the temperature of the heat exchanger to thereby reach the target humidity.

5. The vertical growth tower according to any preceding claim further comprising a vent.

6.  The vertical growth tower according to any preceding claim further comprising an external inlet.

7.  The vertical growth tower according to any preceding claim, wherein the vertical growth tower comprises a stack of growth trays, the stack of growth trays comprise a plurality of growth trays, the HVAC system comprises an outlet conduit extending from the conditioning unit and the outlet conduit comprises a plurality of outlets, one outlet within the plurality of outlets associated with one growth tray within the plurality of growth trays such that each growth tray is associated with a separate outlet.

8.  The vertical growth tower according to any preceding claim, wherein the HVAC system comprises an inlet conduit extending from the conditioning unit to the stack of growth trays, the inlet conduit comprising a plurality of inlets and one inlet within the plurality of inlets is associated with one growth tray within the plurality of growth trays in the stack such that each growth tray within the plurality of growth trays is associated with a separate inlet.

9.  The vertical growth tower according to any preceding claim, wherein the vertical growth tower and HVAC system form a closed loop such that a fixed or substantially fixed volume of air is conditioned continually within the enclosed space.

10. A method of conditioning air within a vertical growth tower of any of claims 1 to 9, the method comprising the steps:

    (a) providing a HVAC system comprising an inlet, an outlet, and a conditioning unit, the conditioning unit comprising a fan configured to urge air into the system from the chamber via the inlet and out of the system into the chamber via the outlet, and a heat exchanger configured to exchange heat with the air within the conditioning unit, a controller, a first plurality of sensors adjacent to the inlet of the HVAC system;
    (b) setting one or more target values selected from the group humidity and temperature;
    (c) the controller receiving one or more readings from the first plurality of sensors and determining system values selected from the group humidity and temperature;
    (d) the controller comparing the system values with the target values and determining the difference between the target values and the system values;
    (e) the controller adjusting the fan speed and the temperature of the heat exchanger to adjust the heat exchanged between air in the conditioning unit and the heat exchanger and/or to adjust the humidity of the air;

    (f) repeating steps (c) to (e) until the system values are equal to the target values, or until the system values are within a predetermined range of values around the target values,

    wherein the temperature of the heat exchanger is controlled by varying the coolant temperature and by varying the flow rate of coolant through the heat exchanger.

**Patentansprüche**

1.  Vertikaler Anzuchtturm, ein Heizungs-, Lüftungs- und Klimatisierungs(HVAC)-System zur Klimatisierung der Luft innerhalb des vertikalen Anzuchtturms umfassend, wobei das System Folgendes umfasst:

    einen Einlass,
    einen Auslass und
    eine Klimatisierungseinheit,

    wobei die Klimatisierungseinheit einen Lüfter umfasst, der dazu konfiguriert ist, Luft von dem vertikalen Anzuchtturm über den Einlass in das System und über den Auslass aus dem System in den vertikalen Anzuchtturm zu drängen, und ein Wärmetauscher Kühlmittel enthält, das durch den Wärmetauscher fließt, wobei der Wärmetauscher dazu konfiguriert ist, Wärme mit der Luft innerhalb der Klimatisierungseinheit auszutauschen, wobei das Kühlmittel Wasser ist; wobei während des Betriebs Luft durch den Lüfter durch die Klimatisierungseinheit gedrängt wird, so dass Wärme zwischen der Luft und dem Wärmetauscher ausgetauscht wird, wobei der Lüfter dazu konfiguriert ist, die Durchflussmenge der durch die Klimatisierungseinheit gedrängten Luft zu variieren, um dadurch die Wärmemenge zu steuern, die zwischen der Luft und dem Wärmetauscher übertragen wird, wobei das HVAC-System dazu konfiguriert ist, die Feuchtigkeit der durch die Klimatisierungseinheit strömenden Luft zu reduzieren, indem es die Temperatur des Wärmetauschers unter den Taupunkt der Luft einstellt, wobei die Temperatur des Wärmetauschers durch Variieren der Kühlmitteltemperatur und durch Variieren der Durchflussmenge von Kühlmittel durch den Wärmetauscher gesteuert wird.

2.  Vertikaler Anzuchtturm nach Anspruch 1, wobei der Wärmetauscher eine Kühlschlange ist.

**3.** Vertikaler Anzuchtturm nach einem vorhergehenden Anspruch, wobei die Klimatisierungseinheit ferner eine Steuerung, einen oder mehrere Sensoren, die benachbart zu dem Einlass sind, und einen oder mehrere Sensoren, die benachbart zu dem Auslass sind, umfasst und die Steuerung während des Gebrauchs dazu konfiguriert ist, (i) Signale von dem einen oder den mehreren Sensoren, die benachbart zu dem Einlass sind, und dem einen oder den mehreren Sensoren, die benachbart zu dem Auslass sind, zu empfangen, (ii) zu bestimmen, ob die in den Einlass eintretende Luft eine Zieltemperatur und/oder eine Zielfeuchtigkeit hat, und (iii) die Lüfterdrehzahl so einzustellen, dass die Luft mit dem Wärmetauscher in Kontakt kommt, um Wärme zwischen dem Wärmetauscher und der Luft zu übertragen, um dadurch die Zieltemperatur und/oder -Feuchtigkeit zu erreichen.

**4.** Vertikaler Anzuchtturm nach einem der Ansprüche 1 oder 2, wobei die Klimatisierungseinheit ferner eine Steuerung, einen oder mehrere Sensoren, die benachbart zu dem Einlass sind, und einen oder mehrere Sensoren, die benachbart zu dem Auslass sind, umfasst und die Steuerung während des Gebrauchs dazu konfiguriert ist, (i) Signale von dem einen oder den mehreren Sensoren, die benachbart zu dem Einlass sind, und dem einen oder den mehreren Sensoren, die benachbart zu dem Auslass sind, zu empfangen, (ii) zu bestimmen, ob die in den Einlass eintretende Luft die Zieltemperatur und/oder die Zielfeuchtigkeit hat, (iii) die Lüfterdrehzahl so einzustellen, dass die Luft mit dem Wärmetauscher in Kontakt kommt, um Wärme zwischen dem Wärmetauscher und der Luft zu übertragen, um dadurch die Zieltemperatur zu erreichen, und (iv) die Temperatur des Wärmetauschers einstellt, um dadurch die Zielfeuchtigkeit zu erreichen.

**5.** Vertikaler Anzuchtturm nach einem vorhergehenden Anspruch, ferner eine Entlüftungsöffnung umfassend.

**6.** Vertikaler Anzuchtturm nach einem vorhergehenden Anspruch, ferner einen Außeneinlass umfassend.

**7.** Vertikaler Anzuchtturm nach einem vorhergehenden Anspruch, wobei der vertikale Anzuchtturm einen Stapel von Anzuchtschalen umfasst, wobei der Stapel von Anzuchtschalen eine Vielzahl von Anzuchtschalen umfasst, das HVAC-System eine Auslassleitung umfasst, die sich von der Klimatisierungseinheit erstreckt, und die Auslassleitung eine Vielzahl von Auslässen umfasst, wobei ein Auslass innerhalb der Vielzahl von Auslässen einer Anzuchtschale innerhalb der Vielzahl von Anzuchtschalen zugeordnet ist, so dass jede Anzuchtschale einem separaten Auslass zugeordnet ist.

**8.** Vertikaler Anzuchtturm nach einem vorhergehenden Anspruch, wobei das HVAC-System eine Einlassleitung umfasst, die sich von der Klimatisierungseinheit zu dem Stapel von Anzuchtschalen erstreckt, die Einlassleitung eine Vielzahl von Einlässen umfasst und ein Einlass innerhalb der Vielzahl von Einlässen einer Anzuchtschale innerhalb der Vielzahl von Anzuchtschalen in dem Stapel zugeordnet ist, so dass jede Anzuchtschale innerhalb der Vielzahl von Anzuchtschalen einem separaten Einlass zugeordnet ist.

**9.** Vertikaler Anzuchtturm nach einem vorhergehenden Anspruch, wobei der vertikale Anzuchtturm und das HVAC-System einen geschlossenen Kreislauf bilden, so dass ein festes oder im Wesentlichen festes Luftvolumen innerhalb des umschlossenen Raums kontinuierlich klimatisiert wird.

**10.** Verfahren zum Klimatisieren von Luft innerhalb eines vertikalen Anzuchtturms nach einem der Ansprüche 1 bis 9, wobei das Verfahren die folgenden Schritte umfasst:

(a) Bereitstellen eines HVAC-Systems, das einen Einlass, einen Auslass und eine Klimatisierungseinheit umfasst, wobei die Klimatisierungseinheit einen Lüfter, der dazu konfiguriert ist, Luft aus der Kammer über den Einlass in das System und über den Auslass aus dem System in die Kammer zu drängen, und einen Wärmetauscher, der dazu konfiguriert ist, Wärme mit der Luft innerhalb der Klimatisierungseinheit auszutauschen, eine Steuerung, eine erste Vielzahl von Sensoren, die benachbart zu dem Einlass des HVAC-Systems sind, umfasst;
(b) Festlegen eines oder mehrerer Zielwerte, die aus der Gruppe Feuchtigkeit und Temperatur ausgewählt sind;
(c) Empfangen von einem oder mehreren Anzeigewerten von der ersten Vielzahl von Sensoren und Bestimmen von Systemwerten, die aus der Gruppe Feuchtigkeit und Temperatur ausgewählt sind, durch die Steuerung;
(d) Vergleichen der Systemwerte mit den Zielwerten und Bestimmen der Differenz zwischen den Zielwerten und den Systemwerten durch die Steuerung;
(e) Einstellen der Lüfterdrehzahl und der Temperatur des Wärmetauschers durch die Steuerung, um die zwischen der Luft in der Klimatisierungseinheit und dem Wärmetauscher ausgetauschte Wärme einzustellen und/oder um die Feuchtigkeit der Luft einzustellen;
(f) Wiederholen der Schritte (c) bis (e), bis die Systemwerte gleich den Zielwerten sind oder bis die Systemwerte innerhalb eines vorbestimmten Wertebereichs um die Zielwerte liegen,

wobei die Temperatur des Wärmetauschers durch Variieren der Kühlmitteltemperatur und durch Variieren der Durchflussmenge von Kühlmittel durch den Wärmetauscher gesteuert wird.

**Revendications**

1. Tour de croissance verticale comprenant un système de chauffage, de ventilation et de conditionnement d'air (CVCA) destiné au conditionnement de l'air à l'intérieur de la tour de croissance verticale, le système comprenant :

une entrée,
une sortie, et
une unité de conditionnement,
l'unité de conditionnement comprenant un ventilateur conçu pour pousser l'air dans le système à partir de la tour de croissance verticale par l'intermédiaire de l'entrée et hors du système dans la tour de croissance verticale par l'intermédiaire de la sortie, et un échangeur de chaleur contient un fluide frigoporteur qui s'écoule à travers l'échangeur de chaleur, l'échangeur de chaleur est conçu pour échanger de la chaleur avec l'air à l'intérieur de l'unité de conditionnement, ledit fluide frigoporteur étant de l'eau ;
durant le fonctionnement, ledit air étant poussé à travers l'unité de conditionnement par le ventilateur de sorte que la chaleur soit échangée entre l'air et l'échangeur de chaleur, ledit ventilateur étant conçu pour faire varier le débit d'air poussé à travers l'unité de conditionnement afin de réguler ainsi la quantité de chaleur transféré entre l'air et l'échangeur de chaleur,
ledit système CVCA étant conçu pour réduire l'humidité de l'air passant à travers l'unité de conditionnement en réglant la température de l'échangeur de chaleur en dessous du point de rosée de l'air,
ladite température de l'échangeur de chaleur étant régulée en faisant varier la température de fluide frigoporteur et en faisant varier le débit de fluide frigoporteur à travers l'échangeur de chaleur.

2. Tour de croissance verticale selon la revendication 1, ledit échangeur de chaleur étant un serpentin de refroidissement.

3. Tour de croissance verticale selon une quelconque revendication précédente, ladite unité de conditionnement comprenant en outre un dispositif de régulation, un ou plusieurs capteurs adjacents à l'entrée, et un ou plusieurs capteurs adjacents à la sortie, et durant l'utilisation, le dispositif de régulation étant conçu pour (i) recevoir des signaux en provenance du ou des capteurs adjacents à l'entrée et du ou des capteurs adjacents à la sortie, (ii) déterminer si l'air entrant dans l'entrée est à une température cible et/ou une humidité cible et (iii) régler la vitesse de ventilateur de sorte que l'air entre en contact avec l'échangeur de chaleur pour transférer de la chaleur entre l'échangeur de chaleur et l'air afin d'atteindre ainsi la température et/ou l'humidité cibles.

4. Tour de croissance verticale selon l'une quelconque des revendications 1 ou 2, ladite unité de conditionnement comprenant en outre un dispositif de régulation, un ou plusieurs capteurs adjacents à l'entrée, et un ou plusieurs capteurs adjacents à la sortie, et durant l'utilisation, le dispositif de régulation étant conçu pour (i) recevoir des signaux en provenance du ou des capteurs adjacents à l'entrée et du ou des capteurs adjacents à la sortie, (ii) déterminer si l'air entrant dans l'entrée est à la température cible et/ou à l'humidité cible, (iii) régler la vitesse de ventilateur de sorte que l'air entre en contact avec l'échangeur de chaleur pour transférer de la chaleur entre l'échangeur de chaleur et l'air afin d'atteindre ainsi la température cible, et (iv) régler la température de l'échangeur de chaleur pour atteindre ainsi l'humidité cible.

5. Tour de croissance verticale selon une quelconque revendication précédente, comprenant en outre un évent.

6. Tour de croissance verticale selon une quelconque revendication précédente, comprenant en outre une entrée externe.

7. Tour de croissance verticale selon une quelconque revendication précédente, ladite tour de croissance verticale comprenant une pile de plateaux de croissance, ladite pile de plateaux de croissance comprenant une pluralité de plateaux de croissance, ledit système CVCA comprenant un conduit de sortie s'étendant à partir de l'unité de conditionnement et ledit conduit de sortie comprenant une pluralité de sorties, une sortie parmi la pluralité de sorties étant associée à un plateau de croissance parmi la pluralité de plateaux de croissance de sorte que chaque plateau de croissance soit associé à une sortie séparée.

8. Tour de croissance verticale selon une quelconque revendication précédente, ledit système CVCA comprenant un conduit d'entrée s'étendant à partir de l'unité de conditionnement jusqu'à la pile de plateaux de croissance, le conduit d'entrée comprenant une pluralité d'entrées et une entrée parmi la pluralité d'entrées étant associée à un plateau de croissance parmi la pluralité de plateaux de croissance dans la pile de sorte que chaque plateau de croissance parmi la pluralité de plateaux de croissance soit associé à une entrée séparée.

9. Tour de croissance verticale selon une quelconque revendication précédente, ladite tour de croissance verticale et ledit système CVCA formant une boucle fermée de sorte qu'un volume d'air fixe ou sensiblement fixe soit conditionné en permanence à l'intérieur de l'espace clos.

10. Procédé de conditionnement d'air à l'intérieur d'une tour de croissance verticale de l'une quelconque des revendications 1 à 9, le procédé comprenant les étapes :

   (a) fourniture d'un système CVCA comprenant une entrée, une sortie et une unité de conditionnement, l'unité de conditionnement comprenant un ventilateur conçu pour pousser l'air dans le système à partir de la chambre par l'intermédiaire de l'entrée et hors du système dans la chambre par l'intermédiaire de la sortie, et un échangeur de chaleur conçu pour échanger de la chaleur avec l'air à l'intérieur de l'unité de conditionnement, un dispositif de régulation, une première pluralité de capteurs adjacents à l'entrée du système CVCA ;
   (b) définition d'une ou plusieurs valeurs cibles sélectionnées dans le groupe humidité et température ;
   (c) le dispositif de régulation recevant une ou plusieurs lectures en provenance de la première pluralité de capteurs et déterminant des valeurs de système sélectionnées dans le groupe humidité et température ;
   (d) le dispositif de régulation comparant les valeurs de système aux valeurs cibles et déterminant la différence entre les valeurs cibles et les valeurs de système ;
   (e) le dispositif de régulation réglant la vitesse de ventilateur et la température de l'échangeur de chaleur pour régler la chaleur échangée entre l'air dans l'unité de conditionnement et l'échangeur de chaleur et/ou pour régler l'humidité de l'air ;
   (f) répétition des étapes (c) à (e) jusqu'à ce que les valeurs de système soient égales aux valeurs cibles, ou jusqu'à ce que les valeurs de système se situent dans une plage prédéfinie de valeurs autour des valeurs cibles,

ladite température de l'échangeur de chaleur étant régulée en faisant varier la température de fluide frigoporteur et en faisant varier le débit de fluide frigoporteur à travers l'échangeur de chaleur.

Fig. 1

Fig. 2

Fig. 3

Fig. 4

Fig. 5

Fig. 6

Fig. 7

Fig. 8

Fig. 9

**EP 4 078 040 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3208561 A
- US 2018220595 A